# EUROPEAN PATENT SPECIFICATION

(11) **EP 3 434 919 B1**
(45) Date of publication and mention of the grant of the patent: **05.01.2022**
(21) Application number: 17770439.2
(22) Date of filing: 24.03.2017
(51) Int. Cl.: F16C 33/42, F16C 33/44, F16C 33/38, F16C 33/66, F16C 19/06

(54) **HOLDER FOR ROLLING BEARING, AND ROLLING BEARING**
HALTER FÜR WÄLZLAGER UND WÄLZLAGER
DISPOSITIF DE RETENUE DE PALIER À ROULEAUX, ET PALIER À ROULEAUX

(30) Priority: 25.03.2016 JP 2016061482
(43) Date of publication of application: 30.01.2019
(73) Proprietor: NTN Corporation, Osaka-shi, Osaka 550-0003 (JP)
(72) Inventor: YOSHIOKA, Shinichi, Nagoya-shi Aichi 460-0003 (JP)
(74) Representative: White, Duncan Rohan
(86) International application number: PCT/JP2017/012136
(87) International publication number: WO 2017/164399

(56) References cited:
- WO-A1-2014/192503
- JP-A- 2007 024 295
- JP-A- 2007 024 295
- JP-A- 2008 196 589
- JP-A- 2009 150 256
- JP-A- 2009 150 256
- JP-A- 2015 510 992

## Description

### TECHNICAL FIELD

The present invention relates to a retainer for a rolling bearing (in particular, a ball bearing), and a rolling bearing using the retainer. In particular, the present invention relates to a rolling bearing used for supporting a main shaft of a main electric motor of a railway vehicle.

### BACKGROUND ART

In a bearing for a main electric motor of a railway vehicle, in order to cope with expansion and contraction in an axial direction of a main shaft due to a change of a temperature, a rolling ball bearing is generally adopted as a bearing at a fixed side, and a cylindrical roller bearing, which can cope with the expansion and the contraction of the main shaft, is generally adopted as a bearing at a free side. The rolling ball bearing at the fixed side is formed as, for example, a deep groove ball bearing provided with a steel ball and a corrugate iron plate retainer. Further, a support structure using the rolling ball bearings for the fixed side and the free side is also proposed. In a case in which the ball bearing is adopted also as a bearing at the free side, the rolling resistance becomes smaller than that of a configuration using the cylindrical roller bearing at the free side, and thereby energy efficiency can be improved and an increase of a temperature of the bearing can be suppressed. Accordingly, energy loss in driving of the main electric motor can be reduced, and a life of grease can be lengthened.

Conventionally, as a metal retainer for such a ball bearing, a corrugate iron plate retainer formed by combining a pair of corrugate ring members is adopted. In the corrugate iron plate retainer, a base coating film is formed on a surface of a metal plate of the corrugate iron plate retainer and then a thin coating film of chromate (chromate) of trivalent chromium is formed on the base coating film. For example, as such a rolling bearing retainer, Patent Document 1 discloses a rolling bearing formed by applying anti-rust base coating treatment such as electro-galvanizing, electro-tin-zinc alloy plating, electro-zinc-iron alloy plating and electro-zinc-nickel alloy plating to a surface of a cold rolled steel sheet and then by applying predetermined trivalent chromate treatment thereto (see JP 2007 024295 A) .

### PRIOR ART DOCUMENTS

### PATENT DOCUMENTS

WO 2014/192503 A1 discloses a rolling bearing retainer, rolling bearing, and production method for rolling bearing retainer.

JP 2007 024295 A discloses a cage for rolling bearing, and rolling bearing.

JP 2009 150256 A discloses the features of the preamble of claim 1, a roller bearing for aircraft.

### SUMMARY OF THE INVENTION

### PROBLEMS TO BE SOLVED BY THE INVENTION

However, in a bearing retainer, when a lubrication state is deteriorated, wear might be generated on a guide surface in a circumferential direction in a pocket contacted with a ball served as a rolling element due to the delay and progress of the ball. When a metal wear fracture of the retainer is mixed with the lubricant, the lubrication state is further deteriorated, so that the lubrication life of the lubricant is deteriorated. In a conventional retainer adopting the plating treatment and the chromate treatment, corrosion resistance can be improved, however such wear might be generated and the lubrication life of the lubricant might be deteriorated depending on a use condition. Especially, in a bearing for a main electric motor of a railway vehicle, in order to cope with a high speed in recent years and to extend a maintenance period, it is desired to firmly prevent the problem as described above.

An object of the present invention is, in order to solve such a problem, to provide a rolling bearing retainer formed as a metal retainer and being capable of suppressing wear of a guide surface of a pocket that retains a ball served as a rolling element even in a case in which a lubrication function by a lubricant is deteriorated, and to provide a rolling bearing using the rolling bearing retainer.

### MEANS FOR SOLVING THE PROBLEM

A rolling bearing retainer is provided as defined in claim 1. Further embodiments are provided as defined in the dependent claims.

The resin coating film may be formed of the resin composition including a polyether ether ketone resin as the matrix resin and including a polytetrafluoroethylene resin as the solid lubricant.

A rolling bearing according to the present invention includes an inner ring, an outer ring, a ball served as a rolling element interposed between the inner ring and the outer ring, and a retainer that retains the ball. The retainer is formed by the rolling bearing retainer according to the present invention. Further, the rolling retainer may be formed to support a main shaft of a main electric motor of a railway vehicle in a rotation manner and used in a grease lubricating state.

### EFFECT OF THE INVENTION

The rolling bearing retainer according to the present invention is formed as a metal retainer including the pockets, which retain the balls as a rolling member, formed at the positions in the circumferential direction, and the resin coating film is formed on at least the inner surface of each of the pockets served as a rolling element guide surface. The resin coating film is formed of a resin composition including an aromatic polyether ketone based resin as a matrix resin and including a solid lubricant. Accordingly, even in a case in which the lubrication function by grease is deteriorated, the wear of the guide surface can be suppressed. Specifically, the wear of a circumferential direction guide surface contacted with the ball caused by the delay and progress of the ball served as a rolling element can be suppressed. As a result, generation of a metal wear fracture can be prevented, and therefore the problem in which the lubrication life of the grease is deteriorated when the metal wear fracture is mixed with the grease can be avoided.

In particular, the resin coating film is formed of the resin composition including a polyether ether ketone resin as the matrix resin and including a polytetrafluoroethylene resin as the solid lubricant, and thereby excellent low friction performance and excellent wear resistance can be obtained. Further, a film thickness of the resin coating film is set in a range between 20 µm and 50 µm, and thereby the wear can be suppressed for a long period of time.

Further, the retainer is formed as a corrugate retainer in which the ring members forming a pair are joined at the connection portion located between the pockets, and the resin coating film is formed on the whole surface of the ring members . Consequently, a relation between the ball and the retainer (a distance between the ball and a surface of the pocket of the retainer, or the like) can be set to be similar to that of the conventional retainer while using the same type of a retainer base material (steel plate) as the conventional retainer and forming the resin coating film thicker than a coating film formed of anti-rust plating and trivalent chromate.

The rolling bearing according to the present invention includes the inner ring, the outer ring, the ball served as a rolling element interposed between the inner ring and the outer ring, and the retainer that retains the ball. The retainer is formed by the rolling bearing retainer according to the present invention, and therefore a rolling bearing having a long lifetime and being capable of suppressing deterioration or the like of the lubrication life of the grease can be obtained. Thus, the rolling bearing according to the present invention can be suitably used as a bearing that supports a main shaft of a main electric motor of a railway vehicle in a rotation manner.

### BRIEF DESCRIPTION OF THE DRAWINGS

Fig. 1 is a plane view illustrating a rolling bearing according to the present invention.
Fig. 2 is a cross-sectional view of a part of the rolling bearing shown in Fig. 1.
Figs. 3(a) and 3(b) are plane views illustrating one of a pair of ring members that forms a corrugate retainer.
Fig. 4 is a view illustrating a configuration of a main electric motor of a railway vehicle.
Fig. 5 is an enlarged view illustrating a configuration (left side) around the rolling bearing shown in Fig. 4.

### MODE FOR CARRYING OUT THE INVENTION

Conventionally, as a rolling bearing for a main electric motor of a railway vehicle, a bearing using a corrugate iron plate retainer such as a deep groove ball bearing is adopted. As described above, in the corrugate iron plate retainer, a predetermined coating film (a thickness of approximately 10 µm) is formed on a surface of the corrugate iron plate retainer, for example, by applying anti-rust base coating treatment such as electro-galvanizing, electro-tin-zinc alloy plating, electro-zinc-iron alloy plating and electro-zinc-nickel alloy plating for preventing generation of rust to a surface of a cold rolled steel sheet and then by applying predetermined trivalent chromate treatment thereto. However, contact of a guide surface of a pocket in the retainer is generated due to the deterioration of the lubrication state in association with an increase of severity in the use condition, and thereby wear might be generated. In a retainer according to the present invention, a predetermined resin coating film is formed on the retainer instead of the coating film of the zinc plating or the like and the trivalent chromate.

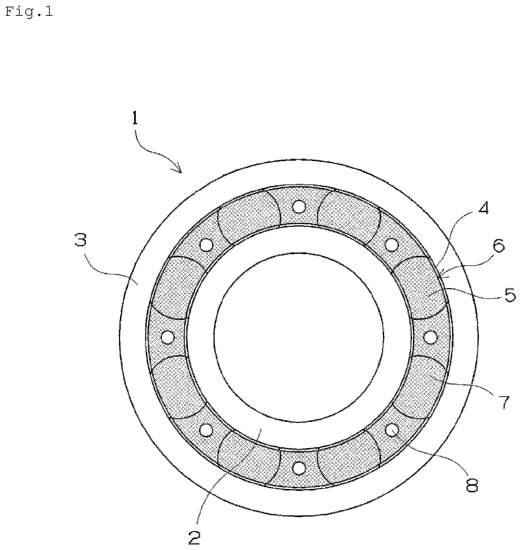

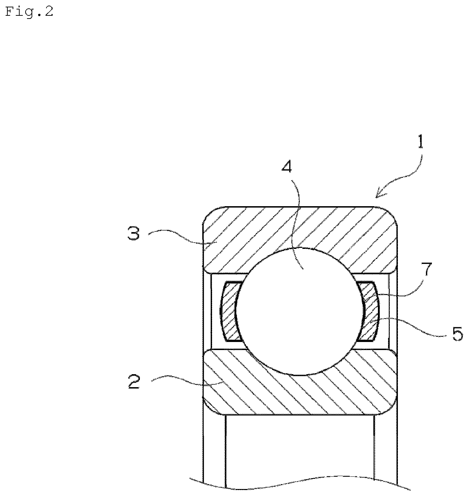

One example of a rolling bearing using a rolling bearing retainer according to the present invention is described with reference to Fig. 1 and Fig. 2. Fig. 1 is a plane view of a rolling bearing. Fig. 2 is a cross-sectional view of a part of the rolling bearing. A rolling bearing 1 is provided with an inner ring 2 having an inner ring rolling surface on an outer circumference, an outer ring 3 having an outer ring rolling surface on an inner circumference, the inner ring 2 and the outer ring 3 being arranged coaxially, and a plurality of balls 4 served as a rolling element arranged between the inner ring rolling surface and the outer ring rolling surface. The balls 4 are retained at the same interval in a circumferential direction by a retainer 5 formed of metal. The retainer 5 includes pockets 6, each of which retains the ball served as a rolling element, at the same interval in the circumferential direction. The retainer 5 is formed as a corrugate retainer in which ring members forming a pair are joined at a connection portion located between the pockets 6. A predetermined resin coating film 7 described below is formed on a surface of the retainer 5. The rolling bearing 1 is used in a state in which grease or a lubricant (not shown) is sealed or supplied around the balls 4.

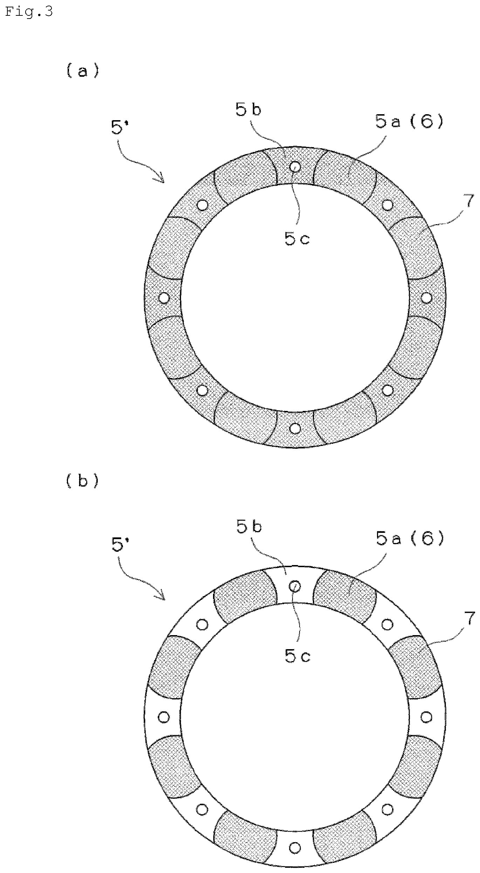

A configuration of the retainer is described with reference to Figs. 3(a) and 3(b). Each of Fig. 3(a) and Fig. 3 (b) shows one of the ring members of the retainer shown in Fig. 1 and Fig. 2. Fig. 3(a) shows a ring member in which a resin coating film is formed on a whole surface of the retainer. Fig. 3 (b) shows a ring member in which a resin coating film is formed on a part of the retainer. As shown in Fig. 1, Fig. 2 and Figs. 3(a) and 3(b), a ring member 5' that forms the retainer 5 is provided with a plurality of curve portions 5a curved along the ball 4, and connections portions 5b that connects the curve portions 5a. The curve portion 5a and the connection portion 5b are formed alternately in the circumferential direction. The connection portion 5b is formed in a substantially flat shape. A hole 5c for riveting is formed in the connection portion 5b. The ring members forming a pair are integrally fixed by a rivet 8 (see Fig. 1) through the hole 5c of the connection portion 5b in a state in which the curve portions 5a face to each other and the connection portions 5b face to each other. The curve portions 5a facing to each other form the pocket 6. An inner surface (rolling element guide surface) of the pocket 6 is formed along an outer diameter shape of the ball 4. That is, the inner surface of the pocket 6 is formed in a recessed spherical shape having a curvature radius as substantially same as a radius of the ball 4.

Each of the ring members 5' is formed by press-forming a metal plate. Any material such as a cold rolled steel plate and carbon steel generally used in the retainer can be adopted as the metal material of the metal plate.

As shown in Figs. 3(a) and 3(b), the resin coating film 7 is formed on at least an inner surface of the curve portion 5a of the ring member 5', so that the resin coating film 7 is formed on an inner surface of the pocket 6 served as a rolling element guide surface of the retainer. The wear of the circumferential direction guide surface contacted with the ball due to the delay and progress of the ball can be suppressed by the resin coating film 7, and thereby generation of a metal wear fracture can be prevented. Thus, the problem in which the lubrication life of grease is deteriorated when the metal wear fracture is mixed with the grease can be avoided.

The resin coating film formed on the retainer according to the present invention is formed of a resin composition using an aromatic polyether ketone (PEK) based resin as a matrix resin including a solid lubricant therein. By adopting the aromatic PEK based resin as a matrix resin, a resin coating film having excellent heat resistance, oil resistance, chemical resistance, creep resistance, and friction wear resistance can be obtained. Further, the aromatic PEK based resin has high toughness and excellent mechanical properties at a high temperature, excellent fatigue resistance and impact resistance, and therefore even if the ball and the resin coating film are contacted with each other due to the delay and progress of the ball and thereby friction force, impact, or vibration is applied to the resin coating film, wear of the resin coating film and peeling of the resin coating film from the retainer base material are hardly generated.

Examples of the aromatic PEK based resin used in the present invention include a polyether ether ketone (PEEK) resin, a polyether ketone (PEK) resin, and a polyether ketone ether ketone ketone (PEKEKK) resin. Of these resins, the PEEK resin is preferable because of its excellent properties and excellent availability.

The PEEK resin is a crystal thermoplastic resin having a polymer structure in which a benzene ring is connected on the para-position to a carbonyl group by an ether bond represented by Formula (1) described below. The PEEK resin having the structure represented by Formula (1) described below has a melting point of approximately 340°C, a glass transition point of 143°C, and excellent heat resistance, creep resistance, load resistance, wear resistance and sliding performance.

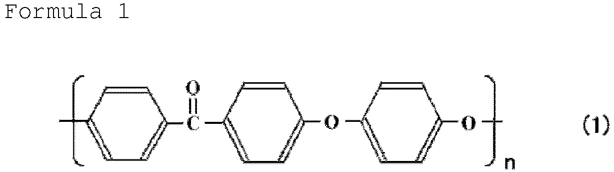

Examples of the solid lubricant used in the present invention include fluororesin and graphite. Any fluororesin capable of adding low friction performance to the resin coating film and having heat resistance enduring the use temperature atmosphere of the resin coating film can be adopted. Examples of the fluororesin include polytetrafluoroethylene (PTFE) resin, tetrafluoroethylene-perfluoroalkyl vinyl ether (PFA) copolymer resin, tetrafluoroethylene-hexafluoropropylene (FEP) copolymer resin, tetrafluoroethylene-ethylene (ETFE) copolymer resin. Of these fluororesins, the powder of the PTFE resin is preferable. The PTFE resin has high melt viscosity of approximately 10¹⁰ Pa·s to 10¹¹ Pa·s at a temperature of approximately 340°C to 380°C and hardly flows at a temperature over the melting point. The PTFE resin has the most excellent heat resistance among the fluororesins, and excellent friction wear resistance.

As the PTFE resin, a general PTFE resin represented by - (CF₂-CF₂) n-. Or alternatively, a modified PTFE resin in which a perfluoroalkylether group (-CₚF₂ₚ-O-) (p is an integral number between 1 to 4), a polyfluoroalkyl group (H(CF₂)_{q}-) (q is an integral number between 1 to 20) or the like is introduced into the general PTFE resin can be adopted. The PTFE resin or the modified PTFE resin may be obtained by means of a suspension polymerization method that obtains general molding powder, or an emulsion polymerization method that obtains fine powder.

An average particle diameter (measured value by a laser analysis method) of the powder of the PTFE resin is not especially limited, however it is preferably set to 20 µm or less from a viewpoint of a film thickness, mechanical strength, and wear resistance of the resin coating film. Further, the powder of the PTFE resin obtained by baking the PTFE resin at a temperature of its melting point or more may be adopted. The powder obtained by irradiating the baked powder with γ rays or electron rays may be also adopted. The baked powder of the PTFE resin has excellent uniform dispersion performance in the coating material that forms the resin coating film and imparts excellent wear resistance to the formed resin coating film, compared to the unbaked PTFE resin (molding powder, fine powder).

It is known that the graphite has excellent properties as a solid lubricant. Examples of a shape of the graphite include a flaky shape, a granular shape, and a spherical shape, and all of them can be adopted. The graphite is classified into natural graphite and artificial graphite. In the present invention, it is preferable to adopt the artificial graphite having 98.5% or more of the fixed carbon. Such graphite is highly compatible with base oil in grease, and even if the oil is not stuck to a surface of the graphite, lubricating performance is ensured by the oil slightly impregnated in the graphite. An average particle diameter (measured value by a laser analysis method) of the graphite is not especially limited, however it is preferably set to 20 µm or less due to the same reason as the PTFE resin.

In the resin composition that forms the resin coating film formed on the retainer according to the present invention, the solid lubricant such as the PTFE resin is compounded by 3 to 150 parts by weight into 100 parts by weight of the aromatic PEK based resin as a matrix resin, more preferably compounded by 10 to 100 parts by weight. Further, the resin composition may contain other reinforcing materials or additives in such an extent in which the required properties in the present invention is not deteriorated.

The resin coating film may be formed by means of a known coating method such as a spray coating method and a dispenser coating method using a resin coating material formed of the resin composition described above. The resin coating material is obtained by dispersing or dissolving the solid content such as the aromatic PEK based resin and the PTFE resin into a solvent or the like. As the solvent or the like, ketones such as acetone, methyl ethyl ketone; esters such as methyl acetate and ethyl acetate; aromatic hydrocarbons such as toluene and xylene; organic halogen compounds such as methyl chloroform, trichloroethylene, and trichlorotrifluoroethane; and non-proton extreme solvents such as N-methyl-2-pyrrolidone (NMP), methylisopyrrolidone (MIP), dimethylformamide (DMF), and dimethylacetamide (DMAC) may be adopted. The kind and the viscosity of the solvent may be adjusted in accordance with the coating method.

The cured resin coating film adhering to the base material of the retainer is obtained by baking the resin coating material after applying the resin coating material to the base material. Further, in order to enhance the adhesion to the coating film, it is preferable that a surface on which the resin coating film is formed of the base material of the retainer is roughened by means of shot blast to form a recess and projection shape or by means of chemical surface treatment to form a fine recess and projection shape before forming the coating film.

A film thickness of the resin coating film is preferably set in a range between 20 µm and 50 µm, more preferably in a range between 25 µm and 35 µm. The film thickness of the resin coating film after the baking may be set to the predetermined range, or alternatively the film thickness of the resin coating film may be set to be thicker after the baking and then adjusted to the predetermined range by means of machining such as polishing.

In Fig. 3(b), the resin coating film 7 is formed only on the curve portion 5a of the ring member 5' and therefore the resin coating film 7 is not formed on the connection portion 5b. The resin coating film 7 is selectively formed by masking the connection portion and a rear surface of the curve portion on which the coating film is not to be formed, before the spray coating is performed. In a case of the conventional coating film formed of anti-rust plating and trivalent chromate, the film thickness is set to approximately 10 µm, and therefore, as described by the preferable range of the film thickness, the film thickness of the resin coating film 7 is thicker than that of the conventional coating film. Thus, in a configuration shown in Fig. 3(b), in a case in which the base material of the retainer has the same dimension as that of the conventional retainer, an excess gap between the pocket 6 and the ball is made slightly smaller.

Further, in a configuration shown in Fig. 3 (a), the resin coating film 7 is formed on a whole surface of the ring member 5', and therefore the resin coating film 7 is also formed on a surface of the connection portion 5b. Thus, when the two ring members are integrated by the rivet, the resin coating film is interposed the connection portions and thereby a slight gap is generated between the connection portions. As a result, although the film thickness of the resin coating film is thicker than that of the conventional coating film, the relation between the ball and the retainer (an excess gap between the pocket and the ball, or the like) can be set to be similar to that of the conventional retainer.

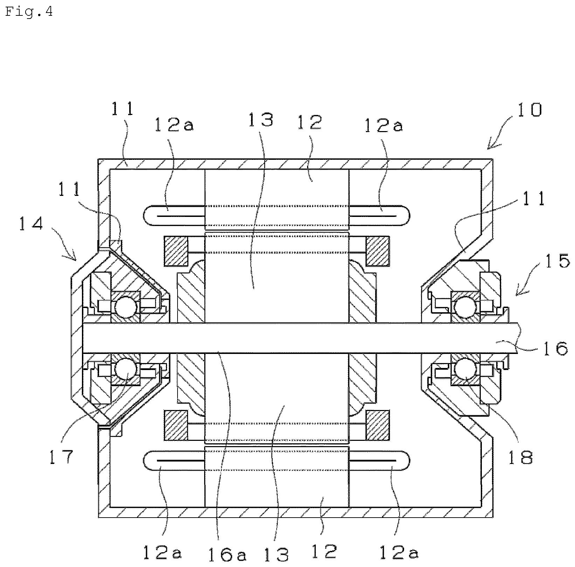

A main electric motor of a railway vehicle to which the rolling bearing according to the present invention is applied is described with reference to Fig. 4. Fig. 4 is a view illustrating a configuration of a main electric motor 10. As shown in Fig. 4, the main electric motor 10 is mainly provided with a stator 12 having a coil 12a, a rotor 13 arranged to face the stator 12, a frame 11 arranged to surround the stator 12 and the rotor 13. A main shaft 16 is fixed to a portion of the rotor 13 including a center portion (rotation axis) so as to penetrate the rotor 13. In the main electric motor 10, a three-phase alternate current is firstly supplied to the coil 12a of the stator 12. At this time, a rotation magnetic field is generated around the rotor 13, and an induction current is generated in the rotor 13 by the rotation magnetic field. In this way, when the rotation magnetic field is generated around the rotor 13 and the induction current is generated in the rotor 13, electromagnetic force is generated so as to rotate the rotor 13 around the rotation axis, and thereby the rotor 13 is rotated. The rotation of the rotor 13 is transmitted to the outside through the main shaft 16.

The main electric motor 10 is further provided with a first bearing device 14 and a second bearing device 15 that support the main shaft 16 in a rotation manner around the axis against a component arranged to face an outer circumference 16a of the main shaft 16. The first bearing device 14 is provided with a first rolling bearing 17 that supports the main shaft 16 at a fixed side. The second bearing device 15 is provided with a second rolling bearing 18 that supports the main shaft 16 at a free side.

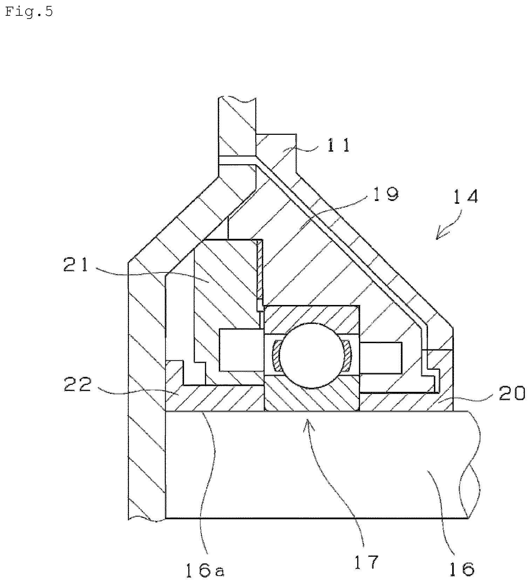

Fig. 5 is an enlarged view illustrating a configuration of the first bearing device 14. As shown in Fig. 5, the first bearing device 14 is provided with the first rolling bearing 17, a housing 19, a stopper 20, an end cover 21, and an oil slinger 22. The first rolling bearing 17 is served as a rolling bearing including the retainer according to the present invention. The first rolling bearing 17 is formed as an open type bearing in which a bearing space between an outer ring and an inner ring is not sealed by a sealing member. A lubricant (lubrication oil or grease) is supplied to the bearing space to be arranged on the raceway surface or the like, so that lubrication is performed. Further, the grease may be sealed by arranging the sealing member . Further, as the lubrication oil or the grease, any lubrication oil or any grease generally used in the bearing for the main electric motor can be adopted.

By adopting the rolling bearing according to the present invention to the support structure, as described above, deterioration of the lubrication life of the grease can be suppressed, and therefore the lubrication life can be lengthened. Further, as shown in Fig. 4, in a case in which the second rolling bearing 18 at the free side is also formed as a ball bearing, the rolling bearing according to the present invention can be applied to the second rolling bearing 18.

### INDUSTRIAL APPLICABILITY

The rolling bearing retainer according to the present invention formed as a metal retainer can suppress the wear of the guide surface of the pocket that retains the ball served as a rolling element even in a case in which a lubrication function by a lubricant is deteriorated. Therefore, the rolling bearing retainer according to the present invention can be applied to various rolling bearings (ball bearings). In particular, the rolling bearing retainer according to the present invention is suitable to a rolling bearing used in a support structure of a main shaft for a main electric motor of a railway vehicle.

### REFERENCE SIGNS LIST

- 1:: rolling bearing (ball bearing)
- 2:: inner ring
- 3:: outer ring
- 4:: ball
- 5:: retainer
- 6:: pocket
- 7:: resin coating film
- 8:: rivet
- 10:: main electric motor
- 11:: frame
- 12:: stator
- 13:: rotor
- 14:: first bearing device
- 15:: second bearing device
- 16:: main shaft
- 17:: first rolling bearing
- 18:: second rolling bearing
- 19:: housing
- 20:: stopper
- 21:: end cover
- 22:: oil slinger

## Claims

1. A rolling bearing retainer (5) configured to retain a rolling element (4) of a rolling bearing (1), **characterized in that**
the retainer (5) is a metal corrugate retainer comprising pockets (6), each of which retains a ball (4) served as the rolling element, formed at positions in a circumferential direction, and
in the retainer (5), ring members (5') forming a pair are joined at a connection portion (5b) located between the pockets, the retainer (5) having a single-layer resin coating film (7) formed on at least an inner surface of each of the pockets (6) served as a rolling element guide surface,
wherein the resin coating film (7) is a coating film formed by applying a coating material of a resin composition including an aromatic polyether ketone based resin as a matrix resin and including a solid lubricant,
wherein the resin coating film is formed only on a curve portion (5a) of the ring members (5') and not formed on the connection portion (5b),
wherein a film thickness of the resin coating film is set in a range between 20 µm and 50 µm.

2. The rolling bearing retainer (5) according to claim 1, wherein the resin coating film (7) is formed of the resin composition including a polyether ether ketone resin as the matrix resin and including a polytetrafluoroethylene resin as the solid lubricant.

3. A rolling bearing (1) comprising:
an inner ring (2);
an outer ring (3);
a ball (4) served as a rolling element interposed between the inner ring (2) and the outer ring (3); and
a retainer (5) that retains the ball (4),
wherein the retainer (5) is formed by the rolling bearing retainer (5) according to claim 1 or 2.

4. The rolling bearing (1) according to claim 3 configured to support a main shaft of a main electric motor of a railway vehicle in a rotation manner and used in a grease lubricating state.

## Patentansprüche

1. Halter für Wälzlager (5), welcher konfiguriert ist, um ein Wälzelement (4) eines Wälzlagers (1) zu halten, **dadurch gekennzeichnet, dass**
der Halter (5) ein gewellter Metallhalter ist, welcher Taschen (6) umfasst, wobei jede davon eine Kugel (4) hält, welche als das Wälzelement dient, gebildet an Positionen in einer Umfangsrichtung, und
in dem Halter (5), Ringglieder (5'), welche ein Paar bilden, an einem Verbindungsabschnitt (5b), welcher zwischen den Taschen angeordnet ist, verbunden sind, wobei der Halter (5) einen an mindestens einer inneren Fläche einer jeden der Taschen (6) gebildeten einschichtigen Harz-Beschichtungsfilm (7) aufweist, welcher als Wälzelement-Führungsfläche dient,
wobei der Harz-Beschichtungsfilm (7) ein Beschichtungsfilm ist, gebildet durch Auftragen eines Beschichtungsmaterials aus einer Harzzusammensetzung, welche ein aromatisches, polyetherketonbasiertes Harz als ein Matrixharz einschließt und einen festen Schmierstoff einschließt,
wobei der Harzbeschichtungsfilm nur an einem Krümmungsabschnitt (5a) der Ringglieder (5') gebildet ist und nicht an dem Verbindungsabschnitt (5b) gebildet ist,
wobei eine Filmdicke des Harzbeschichtungsfilms in einem Bereich zwischen 20 µm und 50 µm eingestellt ist.

2. Halter für Wälzlager (5) nach Anspruch 1, wobei der Harzbeschichtungsfilm (7) aus der Harzzusammensetzung gebildet ist, welche ein Polyetherketonharz als das Matrixharz einschließt, und ein Polytetrafluoroethylenharz als den festen Schmierstoff einschließt.

3. Wälzlager (1), Folgendes umfassend:
einen inneren Ring (2);
einen äußeren Ring (3);
eine Kugel (4), welche als ein zwischen dem inneren Ring (2) von dem äußeren Ring (3) zwischengeschaltetes Wälzelement dient; und
einen Halter (5), welcher die Kugel (4) hält,
wobei der Halter (5) aus dem Halter für ein Wälzlager (5) nach Anspruch 1 oder 2 gebildet ist.

4. Wälzlager (1) nach Anspruch 3, welcher konfiguriert ist, um die Hauptwelle eines Hauptelektromotors eines Schienenfahrzeugs in einer drehenden Weise zu stützen und in einem Fettschmierzustand verwendet wird.

## Revendications

1. Dispositif de retenue de palier à rouleau (5) configuré pour retenir un élément roulant (4) d'un palier à rouleau (1), **caractérisé en ce que** :
le dispositif de retenue (5) est un dispositif de retenue ondulé métallique comprenant des poches (6), chacune d'entre elles retenant une bille (4) servant d'élément roulant, formées dans des positions dans une direction circonférentielle, et
dans le dispositif de retenue (5), des éléments annulaires (5') formant une paire sont joints au niveau d'une partie de connexion (5b) située entre les poches, le dispositif de retenue (5) présentant un film de revêtement en résine monocouche (7) formé sur au moins une surface intérieure de chacune des poches (6) servant de surface de guidage de l'élément roulant,
dans lequel le film de revêtement de résine (7) est un film de revêtement formé en appliquant un matériau de revêtement d'une composition de résine incluant une résine à base de polyéther-cétone aromatique comme résine matrice et incluant un lubrifiant solide,
dans lequel le film de revêtement de résine est formé uniquement sur une partie incurvée (5a) des éléments annulaires (5') et non formé sur la partie de raccordement (5b),
dans lequel une épaisseur de film du film de revêtement de résine est établie dans une plage comprise entre 20 µm et 50 µm.

2. Dispositif de retenue de palier à rouleau (5) selon la revendication 1, dans lequel le film de revêtement de résine (7) est constitué de la composition de résine incluant une résine de polyéther-éther-cétone comme résine matrice et incluant une résine de polytétrafluoroéthylène comme lubrifiant solide.

3. Palier à rouleau (1) comprenant :
une bague intérieure (2) ;
une bague extérieure (3) ;
une bille (4) servant d'élément roulant intercalé entre la bague intérieure (2) et la bague extérieure (3) ; et
un élément de retenue (5) qui retient la bille (4),
dans lequel le dispositif de retenue (5) est formé par le dispositif de retenue de palier à rouleau (5) selon la revendication 1 ou 2.

4. Palier à rouleau (1) selon la revendication 3, configuré pour supporter un arbre principal d'un moteur électrique principal d'un véhicule ferroviaire en mode rotation et utilisé dans un état de lubrification avec de la graisse.
